# FASCICULE DE BREVET EUROPEEN

(11) **EP 4 419 858 B1**
(45) Date de publication et mention de la délivrance du brevet: **19.08.2026**
(21) Numéro de dépôt: 22802595.3
(22) Date de dépôt: 14.10.2022
(51) Int. Cl.: F28F 9/00, B60K 11/04

(54) **COMPOSANT DE SUPPORT ET SUPPORT D'UN ÉCHANGEUR DE CHALEUR OBTENU À PARTIR D'UN ASSEMBLAGE DE TELS COMPOSANTS DE SUPPORT**
TRÄGERBAUTEIL UND AUS EINER ANORDNUNG SOLCHER TRÄGERBAUTEILE ERHALTENER WÄRMETAUSCHERTRÄGER
SUPPORT COMPONENT AND HEAT EXCHANGER SUPPORT OBTAINED FROM AN ASSEMBLY OF SUCH SUPPORT COMPONENTS

(30) Priorité: 21.10.2021 FR 2111215
(43) Date de publication de la demande: 28.08.2024
(73) Titulaire: Valeo Electrification, 95892 Cergy Pontoise (FR)
(72) Inventeur: DENOUAL, Christophe, 78320 Le Mesnil-Saint-Denis (FR); TISON, Frederic, 78320 Le Mesnil-Saint-Denis (FR)
(74) Mandataire: Valeo Powertrain Systems
(86) Numéro de dépôt international: PCT/EP2022/078742
(87) Numéro de publication internationale: WO 2023/066821

(56) Documents cités:
- FR-A1- 3 063 456
- US-A- 6 029 345
- US-A- 6 129 142
- US-A1- 2004 200 598

## Description

Le domaine de la présente invention est celui des supports d'un échangeur de chaleur. Elle a pour objet un composant de support. Elle a aussi pour objet une portion de support comprenant deux composants de support. Elle a aussi pour objet un support comprenant deux portions de support. Elle a aussi pour objet un dispositif de traitement thermique comprenant un tel support et un échangeur de chaleur. Elle a aussi pour objet un module de traitement thermique comprenant un tel dispositif de traitement thermique et des moyens de fixation du dispositif de traitement thermique sur un élément d'un véhicule, notamment automobile. Elle a aussi pour objet un procédé d'assemblage d'un tel support.

Un véhicule automobile est couramment équipé d'une installation de ventilation, de chauffage et/ou de climatisation pour modifier des paramètres aérothermiques d'un air contenu à l'intérieur d'un habitacle du véhicule automobile. L'installation comprend fréquemment un échangeur de chaleur agencé pour permettre un transfert thermique entre deux fluides caloporteurs qui circulent à l'intérieur de l'échangeur de chaleur. On connait parmi ces échangeurs de chaleur, un échangeur de chaleur à plaques qui est obtenu à partir d'un empilement de plaques rectangulaires les unes sur les autres. L'échangeur de chaleur permet un transfert thermique qui dépend notamment d'un volume de l'échangeur de chaleur, et donc du nombre de plaques empilées, et des dimensions des plaques, telles que leur longueur et leur largeur.

L'échangeur de chaleur est rapporté sur un élément du véhicule automobile par l'intermédiaire d'un dispositif de fixation, tel que celui divulgué par le document FR 3008174 qui décrit un dispositif de fixation comprenant un étrier de solidarisation et de fixation d'un échangeur de chaleur à plaques et d'une canalisation. L'étrier comprend une bride principale apte à être agencée autour de l'échangeur de chaleur et un fermoir apte à fermer la bride principale de sorte à enserrer et solidariser l'échangeur et la canalisation.

Or, un concepteur d'une telle installation de ventilation, de chauffage et/ou de climatisation doit disposer de plusieurs types d'échangeur de chaleur de volume respectif distincts, pour répondre à des contraintes de taille du véhicule automobile, d'agencement de l'installation de ventilation, de chauffage et/ou de climatisation, et d'espace disponible pour accueillir l'échangeur de chaleur. Il en résulte que le concepteur d'une telle installation doit aussi disposer d'autant de types de dispositif de fixation que de type d'échangeur de chaleur, ce qui constitue une contrainte de référencement et de stockage. Le document US 2004/200598 A1 montre un échangeur de chaleur avec un cadre.

La présente invention s'inscrit dans ce contexte et propose un composant de support comprenant un corps agencé en U comportant une base s'étendant à l'intérieur d'un plan de base, une première branche s'étendant dans un premier plan orthogonale au plan de base et une deuxième branche s'étendant dans un deuxième plan orthogonale au plan de base. Le corps s'étend entre une première extrémité munie d'un premier organe de liaison et une deuxième extrémité munie d'un deuxième organe de liaison. La base comprend une première face qui est sécante au plan de base et qui est munie d'un troisième organe de liaison et d'un quatrième organe de liaison. La base comprend une deuxième face qui est parallèle au plan de base. La deuxième face est munie d'un premier bras pourvu d'un cinquième organe de liaison. La deuxième face est munie d'un deuxième bras pourvu d'un sixième organe de liaison. Le premier bras et le deuxième bras sont interposés entre la première branche et la deuxième branche.

Le composant de support comprend avantageusement l'une quelconque au moins des caractéristiques techniques suivantes, prises seules ou en combinaison :
- la première face est orthogonale au premier plan et au deuxième plan,
- le premier bras et le cinquième organe de liaison s'étendent selon une première direction qui est parallèle au premier plan et au deuxième plan,
- le deuxième bras et le sixième organe de liaison s'étendent selon une deuxième direction qui est parallèle au premier plan et au deuxième plan,
- la base s'étend principalement le long d'une direction de base qui est orthogonale au premier plan et au deuxième plan,
- la première branche et la deuxième branche sont ménagées en vis-à-vis l'une de l'autre,
- la première branche et la deuxième branche délimitent avec la base un espace interne formant l'intérieur du corps agencé en U,
- le troisième organe de liaison s'étend le long d'une troisième direction,
- le quatrième organe de liaison s'étend le long d'une quatrième direction,
- la troisième direction et la quatrième direction sont contenues à l'intérieur du plan de base,
- la troisième direction et la quatrième direction sont parallèles entre elles,
- la deuxième face borde l'espace interne,
- le premier bras et le deuxième bras s'étendent à l'intérieur de l'espace interne,
- le premier bras s'étend selon une direction parallèle à la première direction et à la deuxième direction,
- le premier bras et le cinquième organe de liaison s'étendent selon une direction parallèle à la première direction et à la deuxième direction,
- le deuxième bras s'étend selon une direction parallèle à la première direction et à la deuxième direction,
- le deuxième bras et le sixième organe de liaison s'étendent selon une direction parallèle à la première direction et à la deuxième direction,
- le premier bras est interposé entre le deuxième bras et la deuxième branche,
- le deuxième bras est interposé entre le premier bras et la première branche,
- le premier bras est porteur d'une première jambe munie d'une première gorge de fixation,
- le deuxième bras est porteur d'une deuxième jambe munie d'une deuxième gorge de fixation,
- la première jambe et la deuxième jambe s'étendent selon une même direction de jambe sécante à la première direction et à la deuxième direction,
- la première jambe comprend une extrémité de première jambe qui est ménagée en vis-à-vis de la deuxième branche et qui est équipée de la première gorge de fixation qui s'étend selon une direction parallèle à la direction de jambe,
- la deuxième jambe comprend une extrémité de deuxième jambe qui est ménagée en vis-à-vis de la première branche et qui est équipée de la deuxième gorge de fixation qui s'étend selon une direction parallèle à la direction de jambe,
- la direction de jambe est orthogonale au premier plan et au deuxième plan,
- la première gorge de fixation est débouchante à travers la première extrémité de jambe,
- la deuxième gorge de fixation est débouchante à travers la deuxième extrémité de jambe,
- le corps est pourvu d'au moins un couple de glissières de fixation comprenant au moins une première glissière de fixation équipant l'une quelconque des deux branches et au moins une deuxième glissière équipant la base ou l'autre quelconque des deux branches,
- les premières glissières de fixation s'étendent selon une direction parallèle à la première direction et/ou la deuxième direction,
- les deuxièmes glissières de fixation s'étendent selon une direction parallèle à la direction de base,
- le composant de support est réalisé en une matière synthétique,
- le composant de support est un ensemble monobloc,
- le composant de support est réalisé à partir d'une seule et unique opération de moulage,
- le composant de support comprend un rail interposé entre le premier bras et le deuxième bras,
- le rail s'étend selon une direction parallèle à la direction de jambe,
- le composant de support est constitué de deux éléments de support,
- le composant de support est constitué de deux éléments de support, dont un premier élément de support agencé en un coude s'étendant à l'intérieur du plan de base et du premier plan, et dont un deuxième élément de support agencé en un coude s'étendant à l'intérieur du plan de base et du deuxième plan,
- le premier élément de support s'étend entre la première extrémité et une troisième extrémité munie d'un septième organe de liaison,
- le premier élément de support comprenant le troisième organe de liaison et le deuxième bras,
- le deuxième élément de support s'étend entre la deuxième extrémité et une quatrième extrémité munie d'un huitième organe de liaison,
- le deuxième élément de support comprend le quatrième organe de liaison et le premier bras,
- le septième organe de liaison est apte à coopérer avec le huitième organe de liaison pour former un moyen d'assemblage des éléments de support,
- le huitième organe de liaison est agencé en un canal apte à loger le septième organe de liaison qui est agencé en un bandeau muni à l'une de ses faces de premières dents aptes à coopérer avec des deuxièmes dents équipant une paroi délimitant le canal.

La présente invention a aussi pour objet une portion de support comprenant avantageusement deux tels composants de supports qui sont identiques.

La portion de support comprend avantageusement l'une quelconque au moins des caractéristiques techniques suivantes, prises seules ou en combinaison :
- le premier organe de liaison de l'un quelconque des composants de support et le deuxième organe de liaison de l'autre quelconque des composants de support sont des organes d'emboîtement aptes à coopérer ensemble pour former un premier moyen de liaison des composants de support,
- le premier organe de liaison de l'un quelconque des composants de support est agencé en un canal apte à loger le deuxième organe de liaison de l'autre quelconque des composants de support qui est agencé en un bandeau muni à l'une de ses faces de premières dents aptes à coopérer avec des deuxièmes dents équipant une paroi délimitant le canal,
- le cinquième organe de liaison de l'un quelconque des composants de support et le sixième organe de liaison de l'autre quelconque des composants de support sont des organes d'emboîtement aptes à coopérer ensemble pour former un deuxième moyen de liaison des composants de support,
- le cinquième organe de liaison de l'un quelconque des composants de support est agencé en un canal apte à loger le sixième organe de liaison de l'autre quelconque des composants de support qui est agencé en un bandeau muni à l'une de ses faces de premières dents aptes à coopérer avec des deuxièmes dents équipant une paroi délimitant le canal.

La présente invention a aussi pour objet un support comprenant deux telles portions de support.

Le support comprend avantageusement l'une quelconque au moins des caractéristiques suivantes, prises seules ou en combinaison :
- le troisième organe de liaison de l'une quelconque des portions de support et le quatrième organe de liaison de l'autre quelconque des portions de support sont des organes d'emboîtement aptes à coopérer ensemble pour former un moyen d'attache des portions de support,
- le troisième organe de liaison de l'une quelconque des portions de support est agencé en un canal apte à loger le quatrième organe de liaison de l'autre quelconque des portions de support qui est agencé en un bandeau muni à l'une de ses faces de premières dents aptes à coopérer avec des deuxièmes dents équipant une paroi délimitant le canal,
- le support est constitué en tout et pour tout de quatre composants de support identiques les uns aux autres,
- le support est constitué en tout et pour tout de quatre premiers éléments de support identiques les uns aux autres et de quatre deuxièmes éléments de support identiques les uns aux autres.

La présente invention a aussi pour objet un dispositif de traitement thermique comprenant un tel support et un échangeur de chaleur logé à l'intérieur d'un volume interne délimité par le support.

Le dispositif de traitement thermique comprend avantageusement l'une quelconque au moins des caractéristiques suivantes, prises seules ou en combinaison :
- le support délimite un volume interne qui forme un logement pour un échangeur de chaleur, tel qu'un échangeur à plaques. Autrement dit, le support forme une enveloppe qui entoure l'échangeur de chaleur dans les trois dimensions de l'échangeur de chaleur,
- le support comporte des ajours délimités par les corps et les bras pour permettre à des raccords d'émerger hors du volume interne afin de connecter l'échangeur de chaleur à des canalisations d'un circuit de liquide caloporteur et d'un circuit de fluide caloporteur par exemple.

La présente invention a aussi pour objet un module de traitement thermique comprenant un tel dispositif de traitement thermique et des moyens de fixation du dispositif de traitement thermique sur un élément d'un véhicule automobile.

Le module de traitement thermique comprend avantageusement l'une quelconque au moins des caractéristiques suivantes, prises seules ou en combinaison :
- les moyens de fixation comprennent des premiers moyens de fixation du dispositif de traitement thermique sur un élément d'un véhicule automobile, ces premiers moyens de fixation comprenant des premiers moyens de vissage aptes à coopérer avec des premiers orifices de vissage ménagés à travers une plaque de fixation, la plaque de fixation et une plaque maintien étant interposées entre une tête et un pied d'au moins un plot de fixation dont le pied est logé à l'intérieur de la gorge de fixation,
- les moyens de fixation comprennent des deuxièmes moyens de fixation comprenant un couple d'organes de fixation agencés en U, chaque organe de fixation comprenant un couple de doigts aptes à être insérés à l'intérieur des premières glissières de fixation équipant les premières branches et les deuxièmes branches, chaque organe de fixation comprenant des deuxièmes orifices de vissage qui sont aptes à coopérer avec des deuxièmes moyens de vissage et qui sont ménagés à travers des pattes de fixation équipant les organes de fixation,
- les moyens de fixation comprennent des troisièmes moyens de fixation comprenant deux couples d'équerres de fixation agencées en L, chaque équerre de fixation comprenant un premier embout apte à être inséré à l'intérieur d'une première glissière de fixation équipant la première branche ou la deuxième branche, chaque équerre de fixation comprend un deuxième embout apte à être inséré à l'intérieur d'une deuxième glissière de fixation équipant la base, chaque équerre de fixation comprenant des troisièmes orifices de vissage qui sont aptes à coopérer avec des troisièmes moyens de vissage et qui sont ménagés à travers des oreilles de fixation équipant chaque angle des équerres de fixation.

La présente invention ne concerne pas un procédé de réalisation d'un tel support, ledit procédé de réalisation comprenant :
- une première étape comprenant un premier mouvement de translation entre deux composants de support parallèle à la première direction et la deuxième direction, pour emboiter les deuxièmes organe de liaison de l'un quelconque des composants de support à l'intérieur des premiers organes de liaison de l'autre quelconque des composants de support, et emboiter les sixièmes organes de liaison de l'un quelconque des premiers composants de support à l'intérieur des cinquièmes organes de liaison de l'autre quelconque composant de support, pour assembler la portion de support,
- une deuxième étape comprenant un deuxième mouvement de translation entre deux portions de support parallèle à une troisième direction selon laquelle s'étend le troisième organe de liaison et une quatrième direction selon laquelle s'étend le quatrième organe de liaison, pour emboiter les quatrièmes organes de liaison de l'une quelconque des portions de support à l'intérieur des deux troisièmes organe de liaison de l'autre quelconque des portions de support, pour assembler les portions de support et former le support.

Ledit procédé de réalisation comprend éventuellement une étape initiale réalisée préalablement à la première étape et la deuxième étape, l'étape initiale comprenant un mouvement translatif du premier élément de support et/ou du deuxième élément de support parallèle à une direction de base selon laquelle s'étend la base de l'un quelconque des éléments de support, pour emboiter le septième organe de liaison à l'intérieur du huitième organe de liaison, et assembler le premier élément de support et le deuxième élément de support pour former un composant de support.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une illustration schématique en perspective d'une première variante de réalisation d'un composant de support selon la présente invention.
[fig 2] est une illustration schématique en perspective d'une deuxième variante de réalisation d'un composant de support selon la présente invention.
[fig 3] est une illustration schématique en perspective d'un premier élément de support constitutif du composant de support représenté sur la figure 2.
[fig 4] est une illustration schématique en perspective d'un deuxième élément de support constitutif du composant de support représenté sur la figure 2.
[fig 5] est une illustration schématique de dessus de deux composants de support représentés sur la figure 1 en cours d'assemblage pour former une portion de support de la présente invention.
[fig 6] est une illustration schématique de dessus de la portion de support obtenue après assemblage des deux composants de support représentés sur la figure 5.
[fig 7] est une illustration schématique de côté de deux portions de support représentées sur la figure 6 en cours d'assemblage pour former un support de la présente invention.
[fig 8] est une illustration schématique de côté du support obtenu après assemblage des deux portions de support représentées sur la figure 7.
[fig 9] est une illustration schématique de côté d'un dispositif de traitement thermique de la présente invention comprenant un support représenté sur la figure 8, qui loge un échangeur de chaleur.
[fig 10] est une illustration schématique en perspective de dessous d'un dispositif de traitement thermique représenté sur la figure 9.
[fig 11] est une vue de détail de dessus du dispositif de traitement thermique représenté sur les figures 9 et 10.
[fig 12] est une autre vue de détail de dessus du dispositif de traitement thermique représenté sur les figures 9 et 10.
[fig 13] est une illustration schématique en perspective d'une première variante de réalisation d'un module de traitement thermique comprenant un dispositif de traitement thermique illustré sur les figures 9 et 10 et des premiers moyens de fixation du dispositif de traitement thermique sur un élément d'un véhicule automobile.
[fig 14] est une illustration schématique en perspective d'une deuxième variante de réalisation d'un module de traitement thermique comprenant un dispositif de traitement thermique illustré sur les figures 9 et 10 et des deuxièmes moyens de fixation du dispositif de traitement thermique sur un élément d'un véhicule automobile.
[fig 15] est une illustration schématique partielle en perspective des deuxièmes moyens de fixation représentés sur la figure 14.
[fig 16] est une illustration schématique en perspective d'une troisième variante de réalisation d'un module de traitement thermique comprenant un dispositif de traitement thermique illustré sur les figures 9 et 10 et des troisièmes moyens de fixation du dispositif de traitement thermique sur un élément d'un véhicule automobile.
[fig 17] est une illustration schématique partielle en perspective des troisièmes moyens de fixation représentés sur la figure 16.
[fig 18] est une illustration schématique de face d'un organe de liaison mâle constitutif du composant de support représenté sur la figure 1, du premier élément de support représente sur la figure 3 et du deuxième élément de support représenté sur la figure 4.
[fig 19] est une illustration schématique en perspective d'un organe de liaison femelle constitutif du composant de support représenté sur la figure 1, du premier élément de support représente sur la figure 3 et du deuxième élément de support représenté sur la figure 4.
[fig 20] est une illustration schématique du dispositif de traitement thermique du dispositif de traitement thermique représenté sur les figures 9 et 10.

Sur les figures, les éléments représentés sont illustrés dans un repère orthonormé Oxyz qui comprend un axe vertical Oy et un plan horizontal Oxz orthogonal à l'axe vertical Oy. Ainsi, dans la suite de la description les qualificatifs « supérieur » et « inférieur » indiquent une position relative d'éléments le long de l'axe vertical Oy. De même, dans la suite de la description le qualificatif « latéral » indique une position relative d'éléments de part et d'autre de l'axe vertical Oy.

On note aussi que les termes premier, deuxième, troisième, etc... sont des adjectifs numéraux ordinaux qualifiant uniquement les termes auxquels ils se rapportent, qui ne définissent aucune hiérarchie ou prédominance les uns par rapport aux autres. Ces adjectifs numéraux ordinaux visent principalement à les énumérer, soit parce qu'ils sont distincts les uns des autres, soit parce qu'ils sont identiques mais en pluralité.

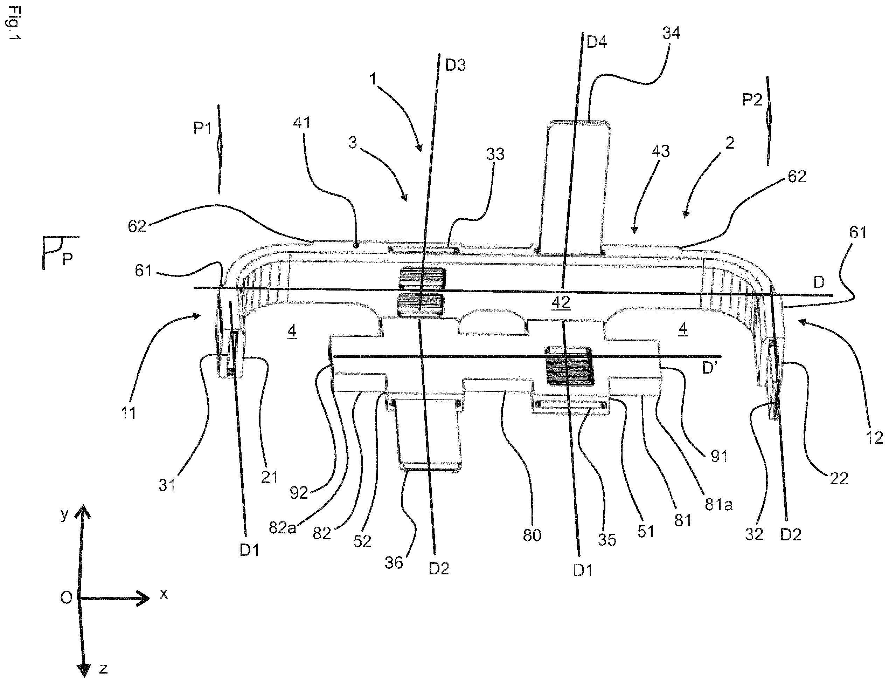

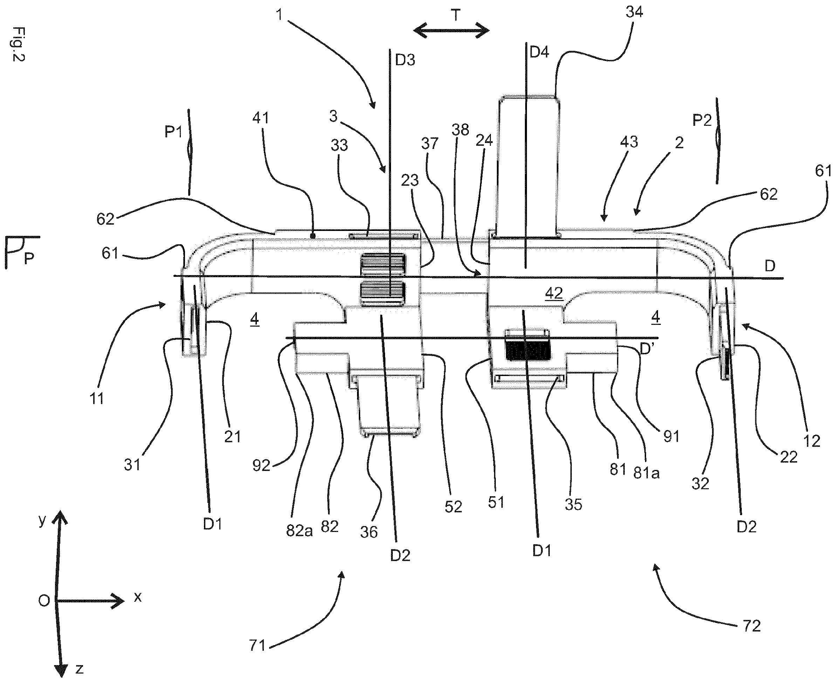

Sur les figures 1 et 2, est représenté un composant de support 1 de la présente invention. Le composant de support 1 est préférentiellement réalisé en une matière synthétique, tel qu'un polyamide ou analogue. Le composant de support est par exemple réalisé à partir d'une seule et unique opération de moulage.

Le composant de support 1 comprend un corps 2 qui est agencé en U. Ainsi, le composant de support 1 comprend une base 3 qui s'étend à l'intérieur d'un plan de base P parallèle au plan Oxy et deux branches 11, 12 parallèles entre elles, dont une première branche 11 qui s'étend dans un premier plan P1 orthogonal au plan de base P et une deuxième branche 12 qui s'étend dans un deuxième plan P2, distinct du premier plan P1 et qui est orthogonal au plan de base P. Plus particulièrement, la base 3 s'étend principalement le long d'une direction de base D, parallèle à la direction Ox. La première branche 11 s'étend principalement selon une première direction D1 orthogonale à la direction de base D et parallèle à l'axe Oz. La deuxième branche 12 s'étend principalement le long d'une deuxième direction D2, parallèle à la première direction D1. On comprend que dans un plan de coupe parallèle au plan Oxz, le corps 2 présente une section conformée en U.

On note aussi que la première branche 11 et la deuxième branche 12 sont ménagées en vis-à-vis l'une de l'autre de telle sorte que la première branche 11 et la deuxième branche 12 délimitent avec la base 3 un espace interne 4 formant l'intérieur du U.

Le corps 2 s'étend entre une première extrémité 21 et une deuxième extrémité 22. La première extrémité 21 est équipée d'un premier organe de liaison 31 et la deuxième extrémité 22 est pourvue d'un deuxième organe de liaison 32. Le premier organe de liaison 31 s'étend le long de la première direction D1 et le deuxième organe de liaison 32 s'étend selon la deuxième direction D2. Le premier organe de liaison 31 est un organe d'emboîtement femelle apte à coopérer avec le deuxième organe de liaison 32 qui est agencé en un organe d'emboîtement mâle complémentaire à l'organe d'emboîtement femelle. Plus particulièrement, et tel que décrit ci-après, le premier organe de liaison 31 d'un composant de support 1 est apte à coopérer avec un deuxième organe de liaison 32 d'un autre composant de support 1, et réciproquement, pour former un premier moyen de liaison 31, 32 de deux composants de support 1 entre eux.

La base 3 comprend une première face 41 qui s'étend dans un plan sécant au plan de base P. Préférentiellement, la première face 41 s'étend dans un plan orthogonal au premier plan P1 et au deuxième plan P2. La première face 41 est munie d'un troisième organe de liaison 33 et d'un quatrième organe de liaison 34. Le troisième organe de liaison 33 s'étend le long d'une troisième direction D3 et le quatrième organe de liaison 34 s'étend selon une quatrième direction D4. La troisième direction D3 et la quatrième direction D4 sont contenues à l'intérieur du plan de base P. La troisième direction D3 et la quatrième direction D4 sont parallèles entre elles et parallèles à la direction Oy. Le troisième organe de liaison 33 est un organe d'emboîtement femelle apte à coopérer avec le quatrième organe de liaison 34 qui est agencé en un organe d'emboîtement mâle complémentaire à l'organe d'emboîtement femelle. Plus particulièrement, et tel que décrit ci-après, le troisième organe de liaison 33 d'un composant de support 1 est apte à coopérer avec un quatrième organe de liaison 34 d'un autre composant de support 1, et réciproquement, pour former un moyen d'attache 33, 34 de deux composants de support 1 entre eux.

La base 3 comprenant une deuxième face 42 qui s'étend à l'intérieur d'un plan parallèle au plan de base P. La deuxième face 42 borde l'espace interne 4. La deuxième face 42 est munie d'un premier bras 51 et d'un deuxième bras 52. Le premier bras 51 et le deuxième bras 52 s'étendent à l'intérieur de l'espace interne 4. Le premier bras 51 s'étend selon une direction parallèle à la première direction D1 et à la deuxième direction D2. Le deuxième bras 52 s'étend selon une direction parallèle à la première direction D1 et à la deuxième direction D2. Dans un plan parallèle au plan Oxz, le premier bras 51 est interposé entre le deuxième bras 52 et la deuxième branche 12, et le deuxième bras 52 est interposé entre le premier bras 51 et la première branche 11. Le premier bras 51 est équipé d'un cinquième organe de liaison 35 qui s'étend selon une direction parallèle à la première direction D1 et à la deuxième direction D2. Le deuxième bras 52 est équipé d'un sixième organe de liaison 36 qui s'étend selon une direction parallèle à la première direction D1 et à la deuxième direction D2. Le cinquième organe de liaison 35 est un organe d'emboîtement femelle apte à coopérer avec le sixième organe de liaison 36 qui est agencé en un organe d'emboîtement mâle complémentaire à l'organe d'emboîtement femelle. Plus particulièrement, et tel que décrit ci-après, le cinquième organe de liaison 35 d'un composant de support 1 est apte à coopérer avec un sixième organe de liaison 36 d'un autre composant de support 1, et réciproquement, pour former un deuxième moyen de liaison 35, 36 de deux composants de support 1 entre eux.

On note que le premier bras 51 et le cinquième organe de liaison 35 s'étendent conjointement selon une même direction parallèle à la première direction D1. On note aussi que le deuxième bras 52 et le sixième organe de liaison 36 s'étendent conjointement selon une même direction parallèle à la deuxième direction D2.

Le premier bras 51 est équipé d'une première jambe 81 qui s'étend à l'intérieur de l'espace interne 4 vers la deuxième branche 12, le long d'une direction de jambe D' parallèle à la direction de base D. La première jambe 81 comprend une extrémité de première jambe 81a qui est ménagée en vis-à-vis de la deuxième branche 12 et qui est équipée d'une première gorge de fixation 91 qui s'étend selon une direction parallèle à la direction de jambe D'.

Le deuxième bras 52 est équipé d'une deuxième jambe 82 qui s'étend à l'intérieur de l'espace interne 4 vers la première branche 11, le long de la direction de jambe D'. La deuxième jambe 82 comprend une extrémité de deuxième jambe 82a qui est ménagée en vis-à-vis de la première branche 11 et qui est équipée d'une deuxième gorge de fixation 92 qui s'étend selon une direction parallèle à la direction de jambe D'.

Préférentiellement, la première gorge de fixation 91 et la deuxième gorge de fixation 92 s'étendent selon une même direction qui est parallèle à la direction de jambe D'. On note que la première gorge de fixation 91 est débouchante à travers la première extrémité de jambe 81a et que la deuxième gorge de fixation 92 est débouchante à travers la deuxième extrémité de jambe 82a.

Le corps 2 est pourvu de deux couples de glissières de fixation 61, 62. Chaque couple de glissières de fixation 61, 62 comprend une première glissière de fixation 61 équipant l'une des branches 11, 12 et une deuxième glissière de fixation 62 équipant la base 3. Les premières glissières de fixation 61 s'étendent selon une direction parallèle à la première direction D1 et/ou la deuxième direction D2. Les deuxièmes glissières de fixation 62 s'étendent selon une direction parallèle à la direction de base D.

Selon une première variante de réalisation illustrée sur la figure 1, le composant de support 1 est un ensemble monobloc, par exemple réalisé en matière plastique en une seule et même opération de moulage. On comprend que le caractère monobloc du composant de support 1 fait qu'aucune partie constitutive du composant de support 1 n'est dissociable du composant de support 1 sans une altération, voire une détérioration de ce dernier.

Selon cette variante, un rail 80 est interposé entre le premier bras 51 et le deuxième bras 52, le rail 80 s'étendant selon une direction parallèle à la direction de jambe D'.

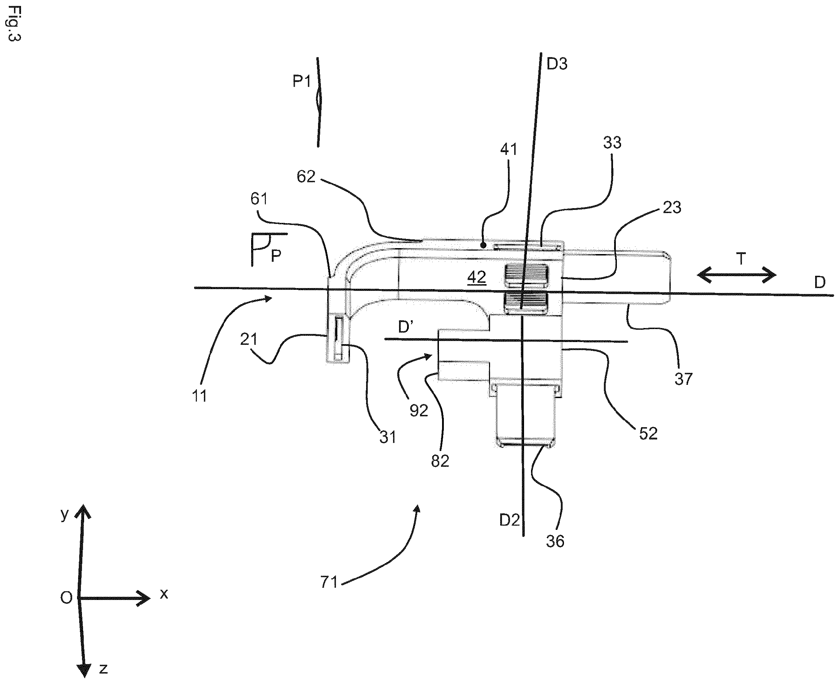

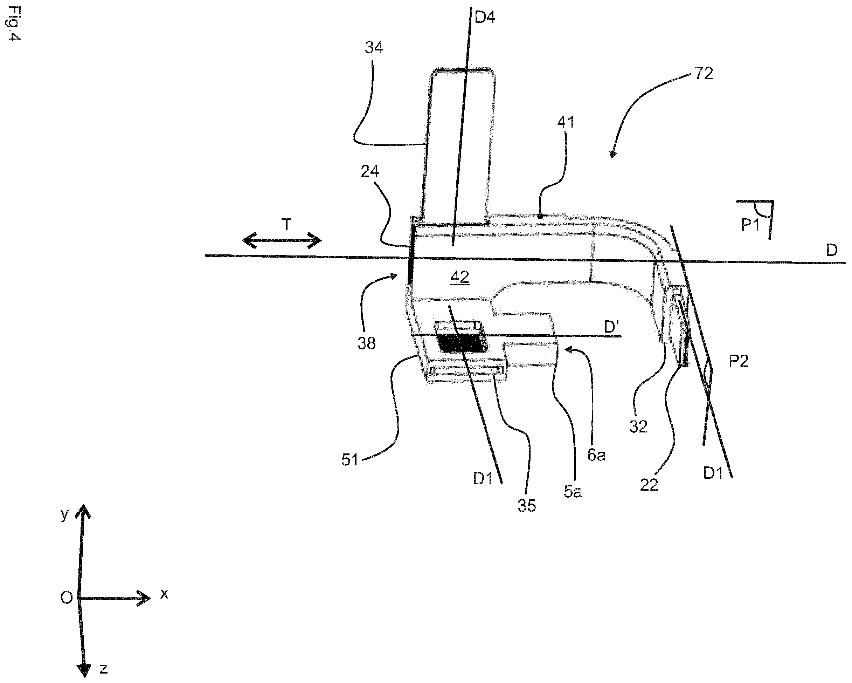

Selon une deuxième variante de réalisation illustrée sur la figure 2, le composant de support 1 est constitué, en tout et pour tout, de deux éléments de support 71, 72, dont un premier élément de support 71, illustré sur la figure 3, et un deuxième élément de support 72, illustré sur la figure 4. Chaque élément de support 71, 72 est un ensemble monobloc, par exemple réalisé en matière plastique en une seule et même opération de moulage. On comprend que le caractère monobloc de l'élément de support 71, 72 fait qu'aucune partie constitutive de l'élément de support 71, 72 n'est dissociable de l'élément de support 71, 72 sans une altération, voire une détérioration de ce dernier.

Le premier élément de support 71 est agencé en un coude s'étendant à l'intérieur du plan de base P et du premier plan P1. Le premier élément de support 71 s'étend entre la première extrémité 21 et une troisième extrémité 23 orthogonale au plan de base P. La troisième extrémité 23 est munie d'un septième organe de liaison 37. Dans sa généralité, le premier élément de support 71 est une première moitié du composant de support 1, le premier élément de support 71 comprenant le troisième organe de liaison 33, le deuxième bras 52, une première glissière de fixation 61 et une deuxième glissière de fixation 62.

Le deuxième élément de support 72 est agencé en un coude s'étendant à l'intérieur du plan de base P et du deuxième plan P2. Le deuxième élément de support 72 s'étend entre la deuxième extrémité 22 et une quatrième extrémité 24 orthogonale au plan de base P. La quatrième extrémité 24 est munie d'un huitième organe de liaison 38. Dans sa généralité, le deuxième élément de support 72 est une deuxième moitié du composant de support 1, le deuxième élément de support 72 comprenant le quatrième organe de liaison 34, le premier bras 51, une première glissière de fixation 61 et une deuxième glissière de fixation 62.

Le septième organe de liaison 37 est un organe d'emboîtement mâle apte à coopérer avec le huitième organe de liaison 38 qui est agencé en un organe d'emboîtement femelle complémentaire à l'organe d'emboîtement mâle. Plus particulièrement, et tel que décrit ci-après, le septième organe de liaison 37 d'un élément de support 71, 72 est apte à coopérer avec le huitième organe de liaison 38 d'un autre élément de support 71, 72, et réciproquement, pour former un moyen d'assemblage 37, 38 de deux éléments de support 71, 72 entre eux.

On comprend qu'à partir d'un mouvement translatif T du premier élément de support 71 et/ou du deuxième élément de support 72 l'un vers l'autre, ce mouvement translatif T étant parallèle à la direction de base D, il est possible d'emboiter le septième organe de liaison 37 à l'intérieur du huitième organe de liaison 38, pour assembler le premier élément de support 71 et le deuxième élément de support 72.

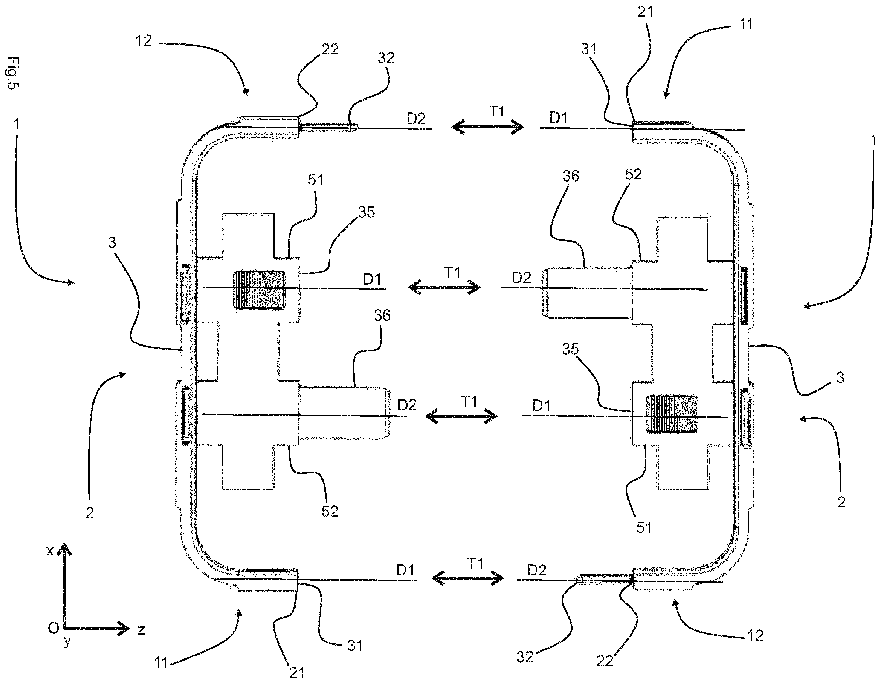

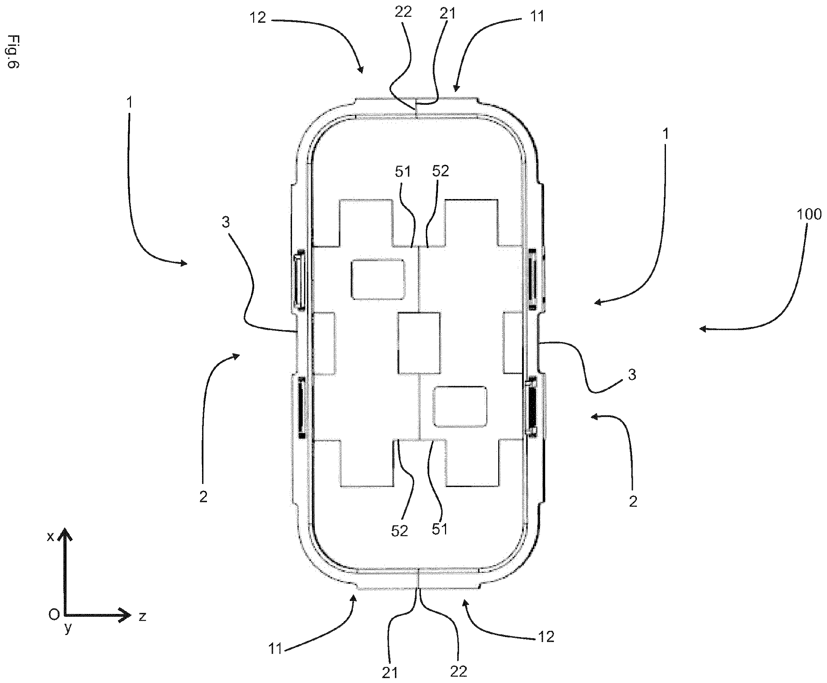

Sur la figure 5, est représentée une portion de support 100 en cours d'assemblage, la portion de support 100 étant constituée, en tout et pour tout, de deux composants de support 1, dont un premier composant de support 1 et un deuxième composant de support 1, qui sont non seulement identiques entre eux de par leur conformation, comme décrit ci-dessus, mais aussi de par leur dimension. On observe qu'à partir d'un premier mouvement de translation T1 du premier composant de support 1 et/ou du deuxième composant de support 1 l'un vers l'autre, ce premier mouvement de translation T1 étant parallèle à la première direction D1 et la deuxième direction D2, il est possible d'emboiter le deuxième organe de liaison 32 du premier composant de support 1 à l'intérieur du premier organe de liaison 31 du deuxième composant de support 1, et simultanément d'emboiter le deuxième organe de liaison 32 du deuxième composant de support 1 à l'intérieur du premier organe de liaison 31 du premier composant de support 1, et simultanément d'emboiter le sixième organe de liaison 36 du premier composant de support 1 à l'intérieur du cinquième organe de liaison 35 du deuxième composant de support 1, et simultanément d'emboiter le sixième organe de liaison 36 du deuxième composant de support 1 à l'intérieur du cinquième organe de liaison 35 du premier composant de support 1, pour assembler entre eux les deux composants de support 1 et former la portion de support 100, tel qu'illustré sur la figure 6.

On note que les composants de support 1 sont assemblés l'un à l'autre par l'intermédiaire de quatre moyens de liaison robustes, dont deux premiers moyens de liaison 31, 32 et deux deuxièmes moyen de liaison 35, 36.

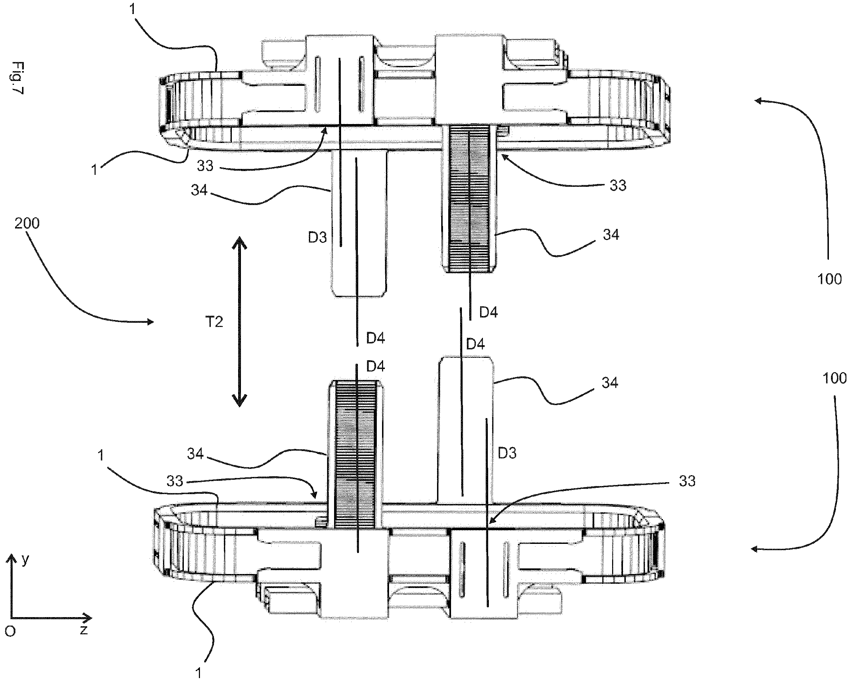

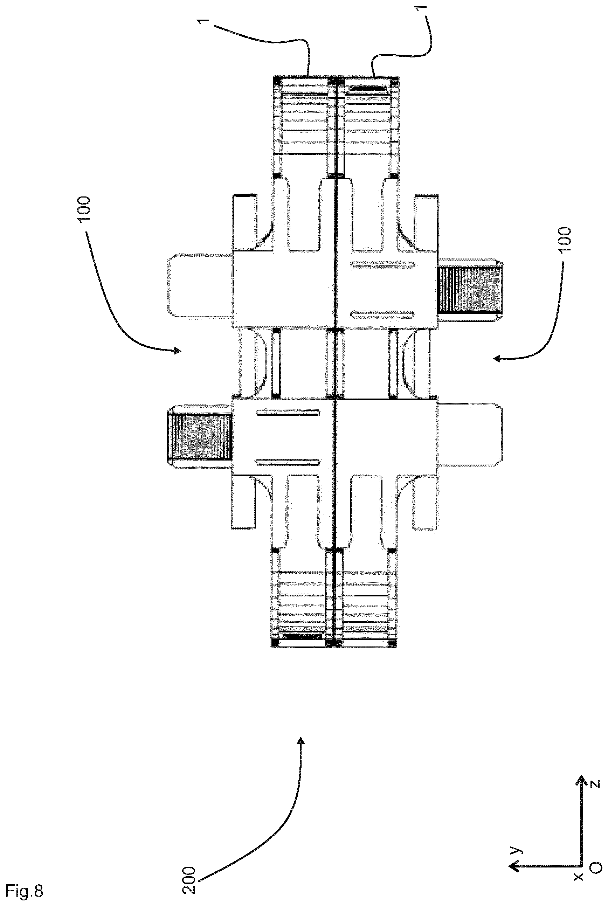

Sur la figure 7, est représentée un support 200 en cours d'assemblage, le support 200 étant constitué, en tout et pour tout, de deux portions de support 100, dont une première portion de support 100 et une deuxième portion de support 100. On observe qu'à partir d'un deuxième mouvement de translation T2 de la première portion de support 100 et/ou de la deuxième portion de support 100 l'une vers l'autre, ce deuxième mouvement de translation T2 étant parallèle à la troisième direction D3 et la quatrième direction D4, il est possible d'emboiter les deux quatrièmes organes de liaison 34 de la première portion de support 100 à l'intérieur respectivement des deux troisièmes organe de liaison 33 de la deuxième portion de support 100, et simultanément d'emboiter les deux quatrièmes organes de liaison 34 de la deuxième portion de support 100 à l'intérieur respectivement des deux troisièmes organes de liaison 33 de la première portion de support 100, pour assembler entre elles les deux portions de support 100 et former le support 200, tel qu'illustré sur la figure 8.

On note que les portions de support 100 sont assemblées l'une à l'autre par l'intermédiaire de quatre moyens d'attache 33, 34 identiques les uns aux autres. On note aussi que le support 200 est constitué en tout et pour tout, soit de quatre composants de support 1 identiques les uns aux autres, tels que celui représenté sur la figure 1, soit de quatre premiers éléments de support 71 identiques les uns aux autres, tels que celui représenté sur la figure 3, et de quatre deuxièmes éléments de support 72 identiques les uns aux autres, tels que celui représenté sur la figure 4. On comprend que ce caractère identique facilite une fabrication et un assemblage de ces éléments entre eux.

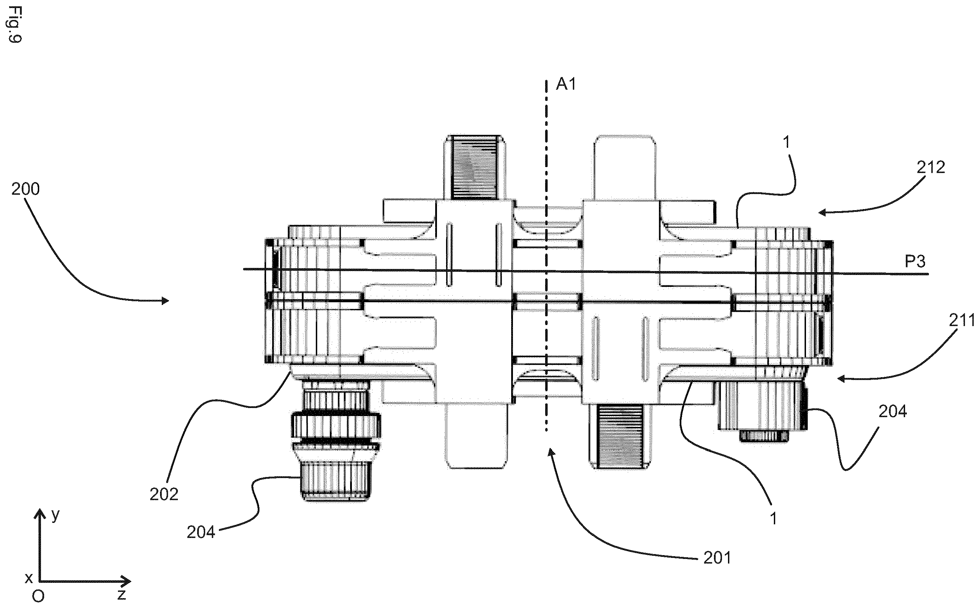

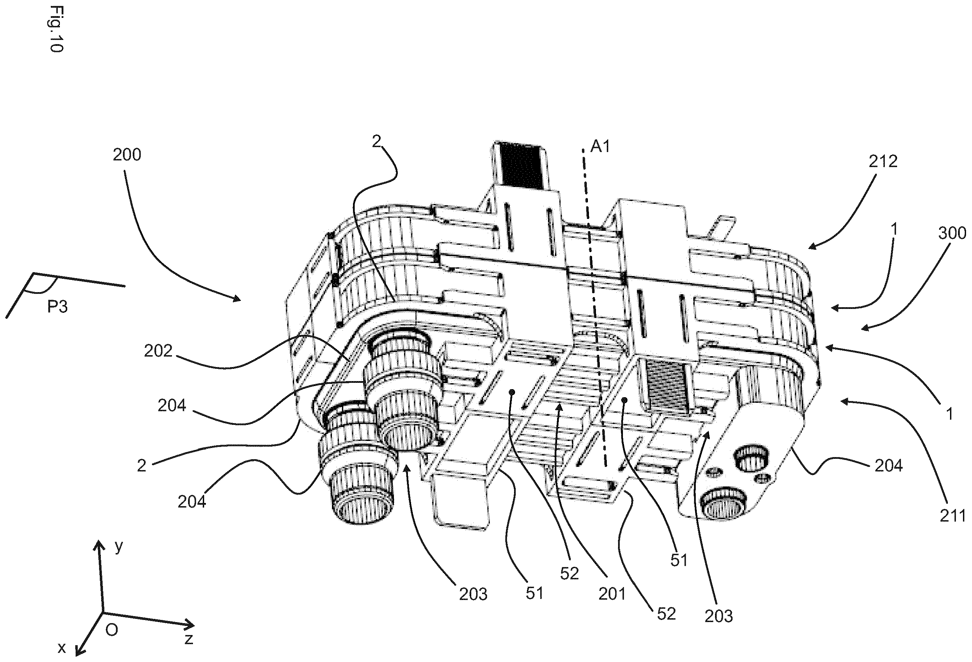

Sur les figures 9 et 10, le support 200 délimite un volume interne 201 qui forme un logement pour un échangeur de chaleur 202, tel que notamment un échangeur à plaques. Autrement dit, le support 200 forme une enveloppe qui entoure l'échangeur de chaleur 202 dans les trois dimensions de l'échangeur de chaleur 202. Autrement dit encore, un dispositif de traitement thermique 210 de la présente invention comprend un support 200 qui forme une armature enveloppant l'échangeur de chaleur 202. On note que le support 200 comporte des ajours 203 délimités par les corps 2 et les bras 51, 52 pour permettre à des raccords 204, tels que des raccords hydrauliques, d'émerger hors du volume interne 201, afin de connecter l'échangeur de chaleur 202 à des canalisations d'un circuit de liquide caloporteur et d'un circuit de fluide caloporteur par exemple. On note que ces ajours 203 équipent par exemple une première face 211 du support 200 étendue dans un plan parallèle au plan Oxz. La première face 211 est préférentiellement orthogonale à un axe d'empilement A1 de plaques 300 constitutives de l'échangeur de chaleur 202, les plaques 300 s'étendant principalement dans un plan de plaque P3 orthogonal à l'axe d'empilement A1.

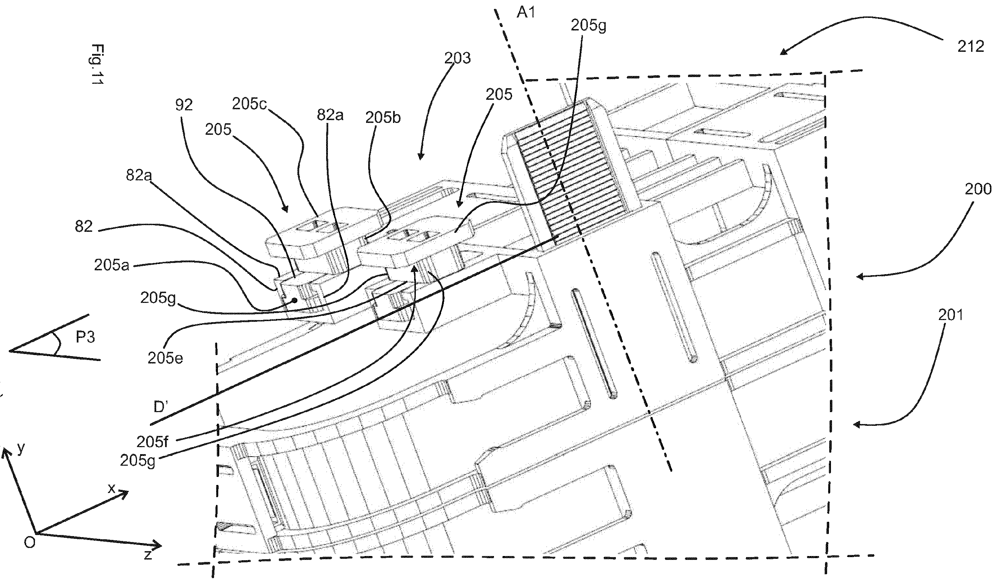

Sur la figure 11, une deuxième face 212 du support 200, opposée et parallèle à la première face 211, comportent également des ajours 203 pour permettre à des plots de fixation 205 d'émerger hors du volume interne 201. Chaque plot de fixation 205 comporte un pied 205a qui est conformé pour pouvoir coulisser à l'intérieur d'une des gorges de fixation 92 des jambes 82. A cet effet, le pied 205a présente, dans un plan orthogonal à la direction de jambe D', un profil en T qui émerge à travers une face supérieure 82a de la jambe 82. Chaque plot de fixation 205 comporte une tige 205b qui s'étend dans un plan orthogonal à la direction de jambe D' entre un bord inférieur 205e solidaire du pied 205a et un bord supérieur 205f solidaire d'une tête 205g qui surplombe la tige 205b. La tige 205b comprend des bords latéraux 205g qui surplombent la face supérieure 82a de la jambe 82 de telle sorte que le bord inférieur 205e du pied 205a au niveau des bords latéraux 205g circulent contre la face supérieure 82a et maintiennent le pied 205a à l'intérieur de la gorge de fixation 92.

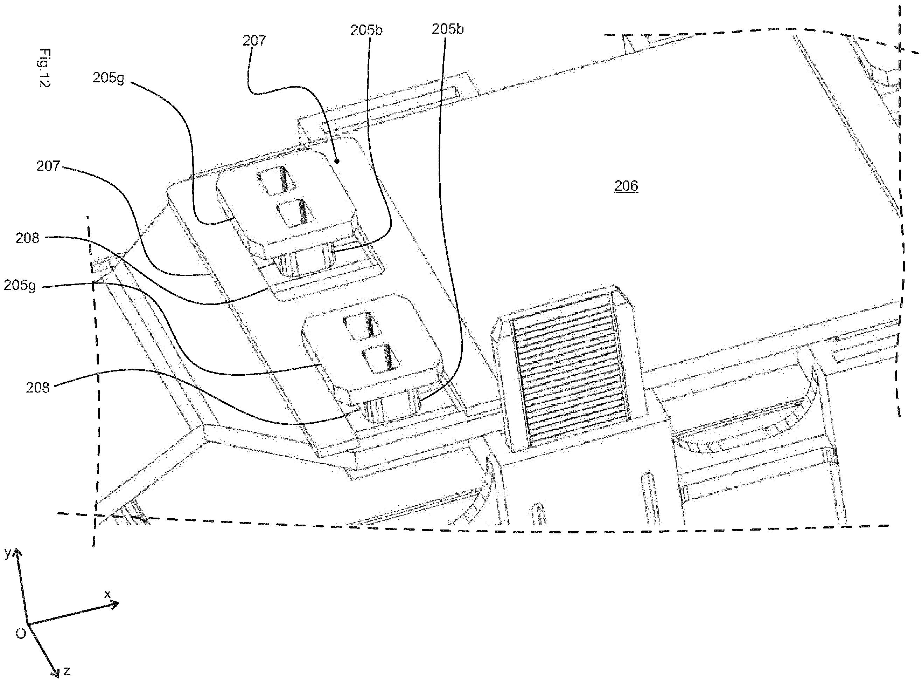

Sur la figure 12, une plaque de fixation 206 et une plaque de maintien 207 comprenant des orifices de maintien 208 sont prévues pour être interposées entre la tête 205g et le pied 205a du plot de fixation 205. Plus particulièrement, la plaque de fixation 206 est interposée entre la plaque de maintien 207 et le pied 205a du plot de fixation 205 tandis que la plaque de maintien 207 est interposée entre la tête 205g du plot de fixation 205 et la plaque de fixation 206. On comprend que les orifices de maintien 208 permettent un passage des têtes 205g qui sont agencées en T pour bloquer la plaque de fixation 206 et la plaque de maintien 207, un des orifices de maintien 208 étant débouchant sur un rebord de la plaque de maintien 207.

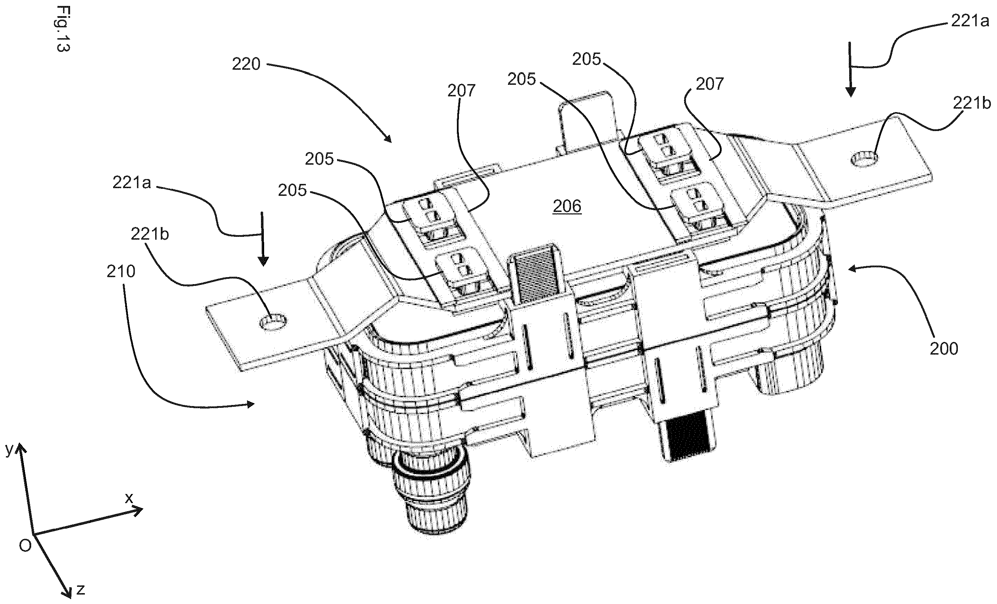

Sur la figure 13, un module de traitement thermique 220 de la présente invention comprend un dispositif de traitement thermique 210 et des premiers moyens de fixation 221 du dispositif de traitement thermique 210 sur un élément d'un véhicule automobile, ces premiers moyens de fixation 221 comprenant par exemple des premiers moyens de vissage 221a aptes à coopérer avec des premiers orifices de vissage 221b ménagés à travers la plaque de fixation 206.

Ces dispositions permettent une fixation simple et rapide du module de traitement thermique 220 sur une paroi du véhicule automobile s'étendant par exemple dans un plan parallèle au plan Oxz. On note toutefois que la plaque de fixation 206 est susceptible de présenter une conformation relativement quelconque pour permettre une fixation du module de traitement thermique 220 sur une paroi quelconque du véhicule automobile.

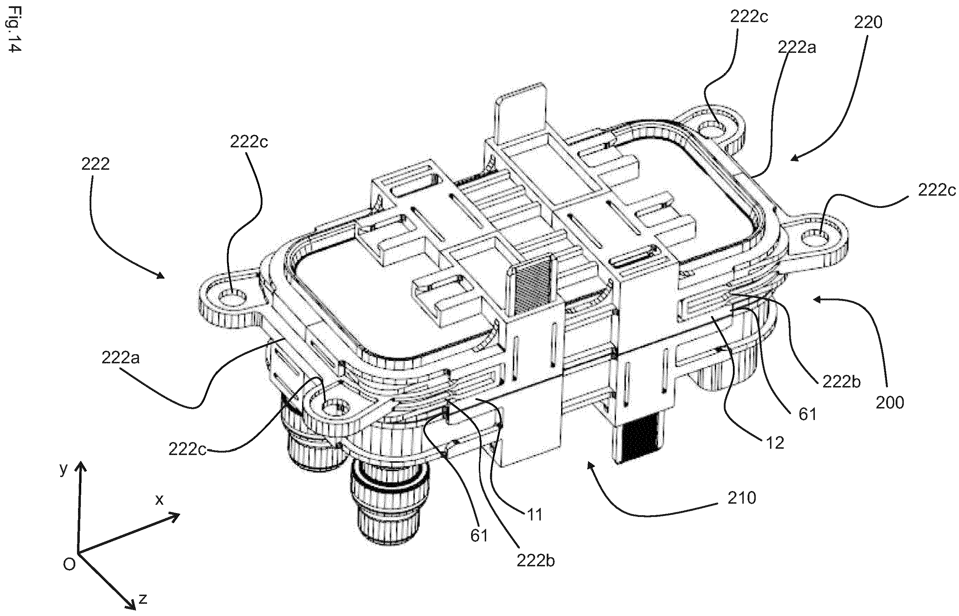

Sur la figure 14, un module de traitement thermique 220 de la présente invention comprend un dispositif de traitement thermique 210 et des deuxièmes moyens de fixation 222 du dispositif de traitement thermique 210 sur un élément d'un véhicule automobile, ces deuxièmes moyens de fixation 222 comprenant un couple d'organes de fixation 222a agencés en U.

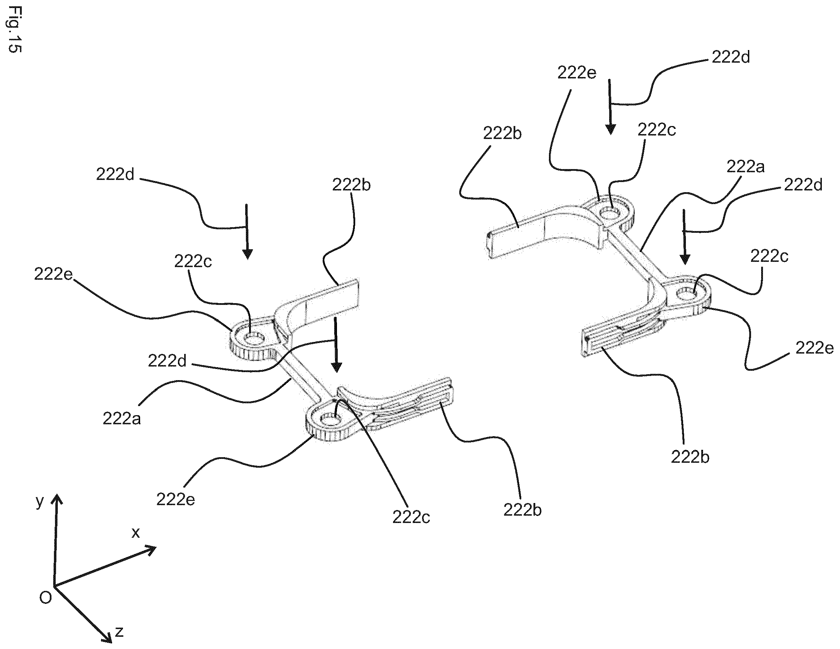

Sur la figure 15, chaque organe de fixation 222a comprend un couple de doigts 222b apte à être insérés à l'intérieur des premières glissière de fixation 61 équipant les premières branches 11 et les deuxièmes branches 12, visibles sur la figure 14. Chaque organe de fixation 222a comprend aussi des deuxièmes orifices de vissage 222c aptes à coopérer avec des deuxièmes moyens de vissage 222d. Les deuxièmes orifices de vissage 222c sont par exemple ménagés à travers des pattes de fixation 222e équipant chaque angle des organes de fixation 222a, situé à l'intersection de la base et des branches des organes de fixation 222a conformés en U. On note que chaque doigt 222b est préférentiellement équipé d'un cliquet déformable permettant l'insertion, puis l'immobilisation du doigt 222b à l'intérieur de la glissière de fixation 61.

Ces dispositions permettent une fixation simple et rapide du module de traitement thermique 220 sur une paroi du véhicule automobile s'étendant par exemple dans un plan parallèle au plan Oxz.

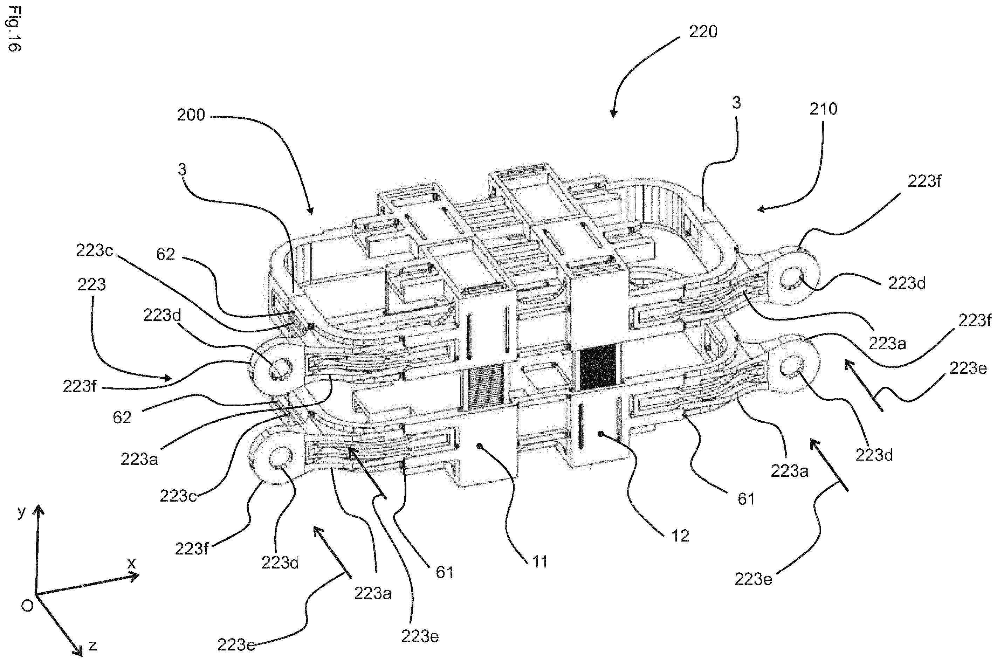

Sur la figure 16, un module de traitement thermique 220 de la présente invention comprend un dispositif de traitement thermique 210 (dont l'échangeur de chaleur n'est pas représenté) et des troisièmes moyens de fixation 223 du dispositif de traitement thermique 210 sur un élément d'un véhicule automobile, ces troisièmes moyens de fixation 223 comprenant deux couples d'équerres de fixation 223a agencées en L.

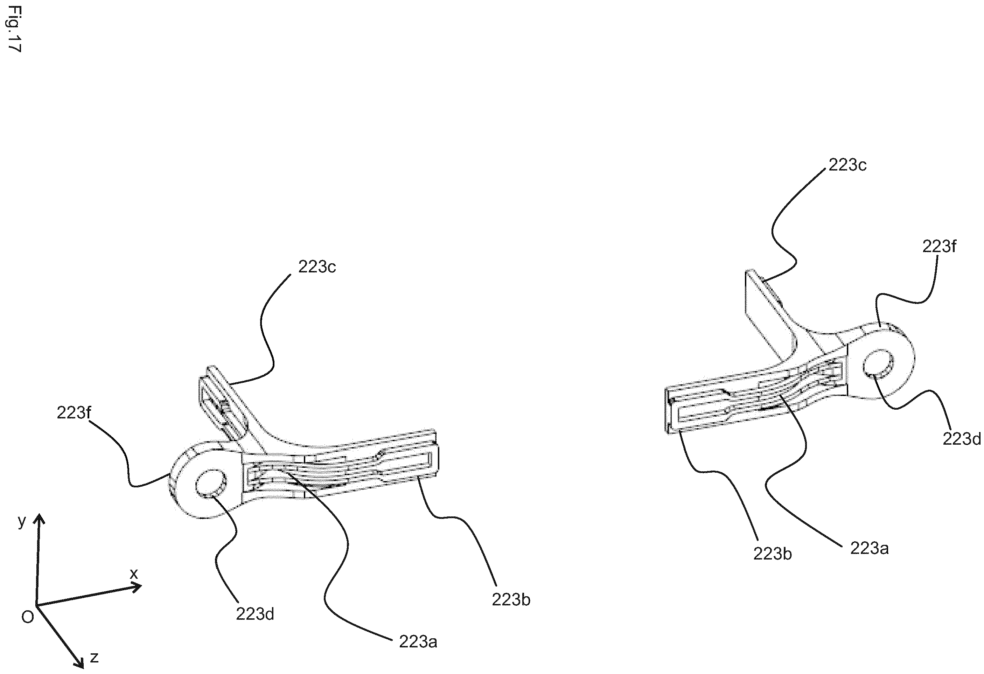

Sur la figure 17, chaque équerre de fixation 223a comprend un premier embout 223b apte à être inséré à l'intérieur d'une première glissière de fixation 61 équipant la première branche 11 ou la deuxième branche 12, visibles sur la figure 15, de deux corps 2 aboutés. Chaque équerre de fixation 223a comprend un deuxième embout 223c apte à être inséré à l'intérieur d'une deuxième glissière de fixation 62 équipant la base 3, visible sur la figure 16. On note que chaque embout 223b, 223c est préférentiellement équipé d'un cliquet déformable permettant l'insertion, puis l'immobilisation de l'embout 223b, 223c à l'intérieur de la glissière de fixation 61, 62.

Chaque équerre de fixation 223a comprend aussi des troisièmes orifices de vissage 223d aptes à coopérer avec des troisièmes moyens de vissage 223e. Les troisièmes orifices de vissage 223d sont par exemple ménagés à travers des oreilles de fixation 223f équipant chaque angle des équerres de fixation 223a.

Ces dispositions permettent une fixation simple et rapide du module de traitement thermique 220 sur une paroi du véhicule automobile s'étendant par exemple dans un plan parallèle au plan Oxy.

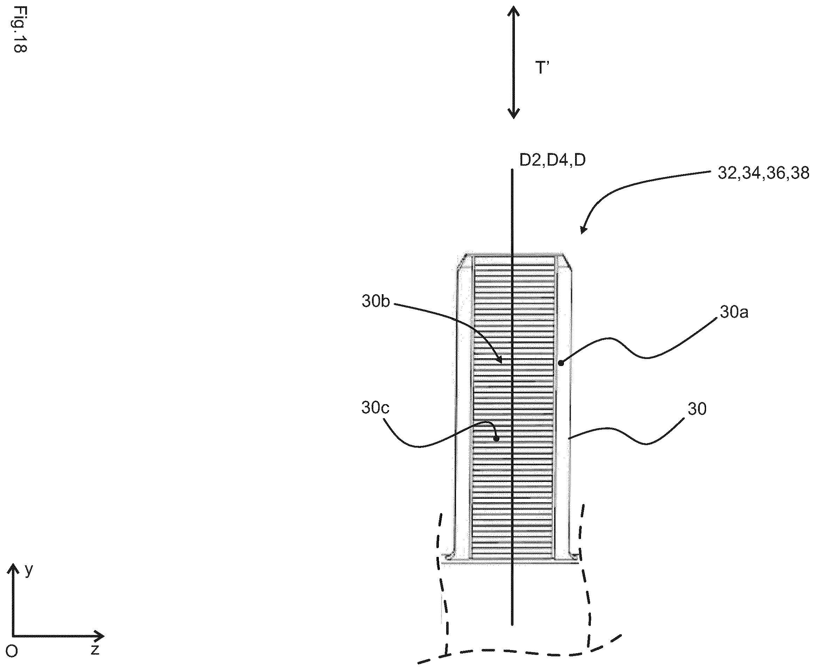

Sur la figure 18, est représenté un organe de liaison mâle 32, 34, 36, 38 illustrant l'un quelconque du deuxième organe de liaison 32, du quatrième organe de liaison 34, du sixième organe de liaison 36 et du huitième organe de liaison 38. Cet organe de liaison mâle 32, 34, 36, 38 est agencé en un bandeau 30 qui comprend à l'une de ses faces 30a une rainure centrale 30b qui s'étend selon la même direction D2, D4, D selon laquelle s'étend l'organe de liaison mâle 32, 34, 36, 38. La rainure centrale 30b est pourvue d'une pluralité de premières dents 30c qui s'étendent selon une direction orthogonale à la direction D2, D4, D selon laquelle s'étend cet organe de liaison mâle 32, 34, 36, 38.

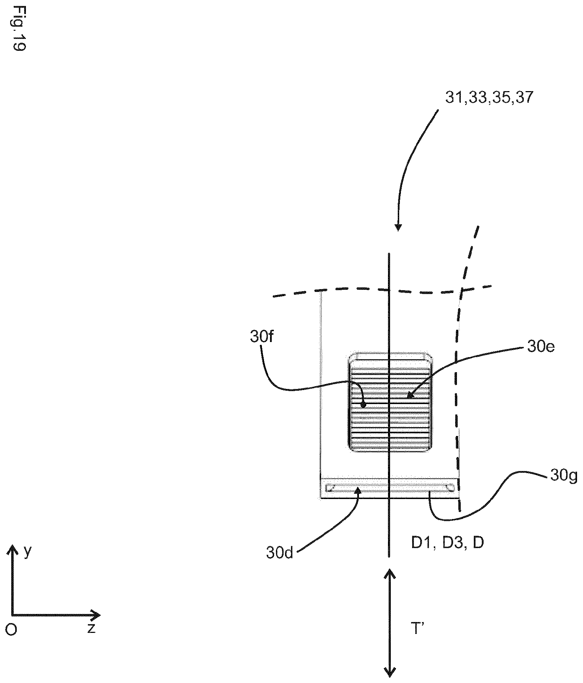

Sur la figure 19, est représenté un organe de liaison femelle 31, 33, 35, 37 illustrant l'un quelconque du premier organe de liaison 31, du troisième organe de liaison 33, du cinquième organe de liaison 35 et du septième organe de liaison 37. Cet organe de liaison femelle 31, 33, 35, 37 est agencé en un canal 30d délimité par au moins une paroi 30e munie de deuxièmes dents 30f qui s'étendent selon une direction orthogonale à la direction D₁, D₃, D selon laquelle s'étend cet organe de liaison femelle 31, 33, 35, 37.

Le canal 30d est pourvue d'une ouverture 30g à travers laquelle le bandeau 30 est apte à être inséré à partir d'un deuxième mouvement translatif T' parallèle aux directions selon lesquelles s'étendent l'organe de liaison mâle 32, 34, 36, 38 et l'organe de liaison femelle 31, 33, 35, 37. Une telle insertion permet une mise en œuvre des premiers moyen de liaison 31, 32 des composants de support 1, du moyen d'attache 33, 34 des portions de support 100, des deuxièmes moyens de liaison 35, 36 des composant de support 1, et des moyen d'assemblage 37, 38 de deux éléments de support 71, 72.

On comprend que l'organe de liaison mâle 32, 34, 36, 38 et l'organe de liaison femelle 31, 33, 35, 37 sont agencés en un cliquet anti-retour qui autorise une insertion du bandeau 30 dans le canal 30d et qui interdit une extraction du bandeau 30 hors du canal 30d.

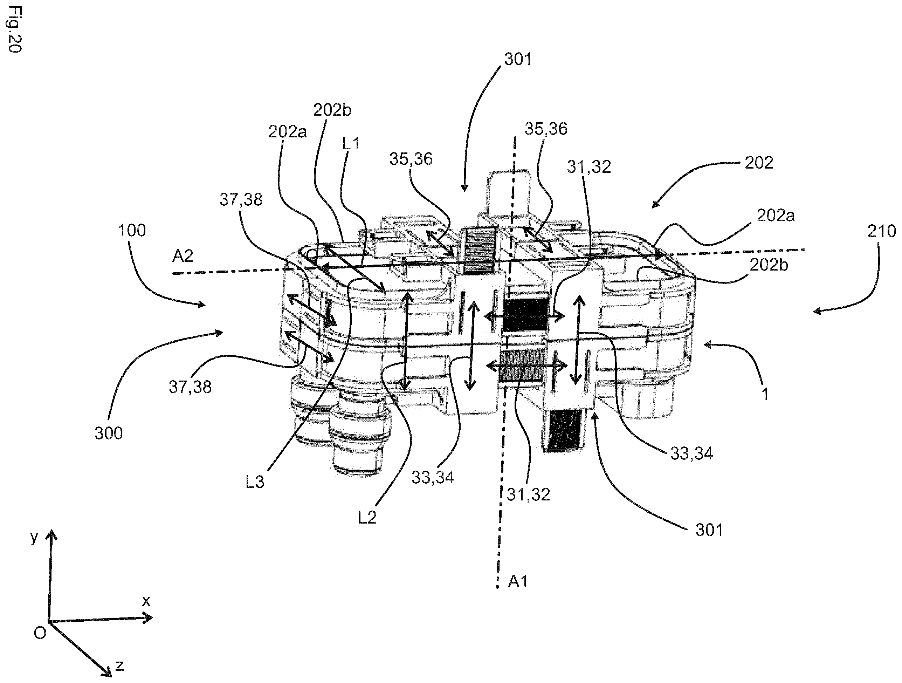

Sur la figure 20, on comprend que l'on adapte l'insertion des premiers organes de liaison 31 à l'intérieur des deuxièmes organes de liaison 32 des premiers moyen de liaison 31, 32 des composants de support 1 selon une longueur **L1** de l'échangeur de chaleur 202, cette longueur **L1** étant prise selon une direction d'allongement A2 de l'échangeur de chaleur 202 et/ou des plaques 300 dont l'échangeur de chaleur 202 est constitué, entre deux bords latéraux 202a de l'échangeur de chaleur 202. On comprend également que le dispositif de traitement thermique 210 est apte à loger un échangeur de chaleur 202 d'une longueur **L1** relativement quelconque.

On comprend aussi que l'on adapte l'insertion des troisièmes organes de liaison 33 à l'intérieur des quatrièmes organes de liaison 34 du moyen d'attache 33, 34 des portions de support 100 selon une épaisseur L2 de l'échangeur de chaleur 202, cette épaisseur L2 étant prise entre les joues d'extrémité 301 de l'échangeur de chaleur 202 selon une direction perpendiculaire à la direction d'allongement A2 de l'échangeur de chaleur 202 et/ou des plaques 300. On comprend également que le dispositif de traitement thermique 210 est apte à loger un échangeur de chaleur 202 d'une épaisseur L2 relativement quelconque, et donc d'un échangeur de chaleur 202 comportant un nombre de plaques 300 relativement quelconque.

On comprend aussi que l'on adapte l'insertion des cinquièmes organes de liaison 35 à l'intérieur des sixièmes organes de liaison 36 des deuxièmes moyens de liaison 35, 36 des composant de support 1, et éventuellement des septièmes organes de liaison 37 à l'intérieur des huitièmes organes de liaison 38 des moyen d'assemblage 37, 38 des éléments de support 71, 72 selon une largeur L3 de l'échangeur de chaleur 202, cette largeur L3 étant prise selon une direction perpendiculaire à la direction d'allongement A2 de l'échangeur de chaleur 202 et/ou des plaques 300, entre deux bords longitudinaux 202b de l'échangeur de chaleur 202. On comprend également que le dispositif de traitement thermique 210 est apte à loger un échangeur de chaleur 202 d'une largeur L3 relativement quelconque.

L'ensemble de ces dispositions est tel qu'à partir d'une pluralité de composants de support 1 identiques les uns aux autres, ou bien à partir d'une pluralité de premiers éléments de support 71 identiques les uns aux autres et une pluralité de deuxièmes éléments de support 72 identiques les uns aux autres, le support 200 obtenu est à même de loger en son volume interne 201 un échangeur de chaleur 202 d'un volume quelconque, et plus particulièrement comprenant un nombre quelconque de plaques 300.

Plus particulièrement, l'ensemble de ces dispositions est tel qu'à partir de quatre composants de support 1 identiques les uns aux autres, ou bien à partir de quatre premiers éléments de support 71 identiques les uns aux autres et de quatre deuxièmes éléments de support 72 identiques les uns aux autres, le support 200 obtenu est à même de loger en son volume interne 201 un échangeur de chaleur 202 d'un volume quelconque, et plus particulièrement comprenant un nombre quelconque de plaques 300.

## Revendications

1. Composant de support (1) comprenant un corps (2) agencé en U comportant une base (3) s'étendant à l'intérieur d'un plan de base (P), une première branche (11) s'étendant dans un premier plan (P1) orthogonale au plan de base (P) et une deuxième branche (12) s'étendant dans un deuxième plan (P2) orthogonale au plan de base (P), le corps (2) s'étendant entre une première extrémité (21) munie d'un premier organe de liaison (31) et une deuxième extrémité (22) munie d'un deuxième organe de liaison (32), **caractérisé en ce que** la base (3) comprend une première face (41) qui est sécante au plan de base (P) et qui est munie d'un troisième organe de liaison (33) et d'un quatrième organe de liaison (34), la base (3) comprenant une deuxième face (42) qui est parallèle au plan de base (P) et qui est munie d'un premier bras (51) pourvu d'un cinquième organe de liaison (35) et d'un deuxième bras (52) pourvu d'un sixième organe de liaison (36), le premier bras (51) et le deuxième bras (52) étant interposés entre la première branche (11) et la deuxième branche (12).

2. Composant de support (1) selon la revendication précédente, **caractérisé en ce que** le premier bras (51) et le cinquième organe de liaison (35) s'étendent selon une première direction (D1) qui est parallèle au premier plan (P1) et au deuxième plan (P2).

3. Composant de support (1) selon l'une quelconque des revendications précédentes, **caractérisé en ce que** le deuxième bras (52) et le sixième organe de liaison (36) s'étendent selon une deuxième direction (D2) qui est parallèle au premier plan (P1) et au deuxième plan (P2).

4. Composant de support (1) selon les revendications 2 et 3, **caractérisé en ce que** le premier bras (51) est porteur d'une première jambe (81) munie d'une première gorge de fixation (91) et le deuxième bras (52) est porteur d'une deuxième jambe (82) munie d'une deuxième gorge de fixation (92), la première jambe (81) et la deuxième jambe (82) s'étendant selon une même direction de jambe (D') sécante à la première direction (D1) et à la deuxième direction (D2).

5. Composant de support (1) selon l'une quelconque des revendications précédentes, **caractérisé en ce que** le corps (2) est pourvu d'au moins un couple de glissières de fixation (61, 62) comprenant au moins une première glissière de fixation (61) équipant l'une quelconque des deux branches (11, 12) et au moins une deuxième glissière (62) équipant la base (3) ou l'autre quelconque des deux branches (11, 12).

6. Composant de support (1) selon l'une quelconque des revendications précédentes, **caractérisé en ce que** le composant de support (1) est constitué de deux éléments de support (71, 72), dont un premier élément de support (71) agencé en un coude s'étendant à l'intérieur du plan de base (P) et du premier plan (P1), le premier élément de support (71) s'étendant entre la première extrémité (21) et une troisième extrémité (23) munie d'un septième organe de liaison (37), le premier élément de support (71) comprenant le troisième organe de liaison (33) et le deuxième bras (52), et dont un deuxième élément de support (72) agencé en un coude s'étendant à l'intérieur du plan de base (P) et du deuxième plan (P2), le deuxième élément de support (72) s'étendant entre la deuxième extrémité (22) et une quatrième extrémité (24) munie d'un huitième organe de liaison (38), le deuxième élément de support (72) comprenant le quatrième organe de liaison (34) et le premier bras (51), le septième organe de liaison (37) étant apte à coopérer avec le huitième organe de liaison (38) pour former un moyen d'assemblage (37, 38) des éléments de support (71, 72).

7. Composant de support (1) selon la revendication 6, **caractérisé en ce que** le huitième organe de liaison (38) est agencé en un canal (30d) apte à loger le septième organe de liaison (37) qui est agencé en un bandeau (30) muni à l'une de ses faces (30a) de premières dents (30c) aptes à coopérer avec des deuxièmes dents (30f) équipant une paroi (30e) délimitant le canal (30d).

8. Portion de support (100) comprenant deux composants de supports (1) selon l'une quelconque des revendications précédentes qui sont identiques, **caractérisée en ce que** le premier organe de liaison (31) de l'un quelconque des composants de support (1) et le deuxième organe de liaison (32) de l'autre quelconque des composants de support (1) sont des organes d'emboîtement aptes à coopérer ensemble pour former un premier moyen de liaison (31, 32) des composants de support (1).

9. Portion de support (100) selon la revendication 8, **caractérisée en ce que** le premier organe de liaison (31) de l'un quelconque des composants de support (1) est agencé en un canal (30d) apte à loger le deuxième organe de liaison (32) de l'autre quelconque des composants de support (1) qui est agencé en un bandeau (30) muni à l'une de ses faces (30a) de premières dents (30c) aptes à coopérer avec des deuxièmes dents (30f) équipant une paroi (30e) délimitant le canal (30d).

10. Portion de support (100) selon l'une quelconque des revendications 8 et 9, **caractérisée en ce que** le cinquième organe de liaison (35) de l'un quelconque des composants de support (1) et le sixième organe de liaison (36) de l'autre quelconque des composants de support (1) sont des organes d'emboîtement aptes à coopérer ensemble pour former un deuxième moyen de liaison (35, 36) des composants de support (1).

11. Portion de support (100) selon la revendication 10, **caractérisée en ce que** le cinquième organe de liaison (35) de l'un quelconque des composants de support (1) est agencé en un canal (30d) apte à loger le sixième organe de liaison (36) de l'autre quelconque des composants de support (1) qui est agencé en un bandeau (30) muni à l'une de ses faces (30a) de premières dents (30c) aptes à coopérer avec des deuxièmes dents (30f) équipant une paroi (30e) délimitant le canal (30d).

12. Support (200) comprenant deux portions de support (100) selon l'une quelconque des revendications 8 à 11, **caractérisé en ce que** le troisième organe de liaison (33) de l'une quelconque des portions de support (100) et le quatrième organe de liaison (34) de l'autre quelconque des portions de support (100) sont des organes d'emboîtement aptes à coopérer ensemble pour former un moyen d'attache (33, 34) des portions de support (100).

13. Support (200) selon la revendication 12, **caractérisé en ce que** le troisième organe de liaison (33) de l'une quelconque des portions de support (100) est agencé en un canal (30d) apte à loger le quatrième organe de liaison (34) de l'autre quelconque des portions de support (100) qui est agencé en un bandeau (30) muni à l'une de ses faces (30a) de premières dents (30c) aptes à coopérer avec des deuxièmes dents (30f) équipant une paroi (30e) délimitant le canal (30d).

14. Dispositif de traitement thermique (210) comprenant un support (200) selon l'une quelconque des revendications 12 et 13 et un échangeur de chaleur (202) logé à l'intérieur d'un volume interne (201) délimité par le support (200).

15. Module de traitement thermique (220) comprenant un dispositif de traitement thermique (210) selon la revendication 14 et des moyens de fixation (221) du dispositif de traitement thermique (210) sur un élément d'un véhicule automobile.

## Patentansprüche

1. Stützbauteil (1), umfassend einen U-förmig angeordneten Körper (2) mit einer Basis (3), die sich innerhalb einer Basisebene (P) erstreckt, einem ersten Zweig (11), der sich in einer ersten Ebene (P1) senkrecht zur Basisebene (P) erstreckt, und einem zweiten Zweig (12), der sich in einer zweiten Ebene (P2) senkrecht zur Basisebene (P) erstreckt, wobei sich der Körper (2) zwischen einem ersten Ende (21), das mit einem ersten Verbindungsorgan (31) versehen ist, und einem zweiten Ende (22), das mit einem zweiten Verbindungsorgan (32) versehen ist, erstreckt, **dadurch gekennzeichnet, dass** die Basis (3) eine erste Fläche (41) umfasst, die die Basisebene (P) schneidet und mit einem dritten Verbindungsorgan (33) und einem vierten Verbindungsorgan (34) versehen ist, wobei die Basis (3) eine zweite Fläche (42) umfasst, die parallel zur Basisebene (P) verläuft und mit einem ersten Arm (51), der mit einem fünften Verbindungsorgan (35) versehen ist, und einem zweiten Arm (52), der mit einem sechsten Verbindungsorgan (36) versehen ist, ausgestattet ist, wobei der erste Arm (51) und der zweite Arm (52) zwischen dem ersten Zweig (11) und dem zweiten Zweig (12) angeordnet sind.

2. Stützbauteil (1) nach dem vorhergehenden Anspruch, **dadurch gekennzeichnet, dass** sich der erste Arm (51) und das fünfte Verbindungsorgan (35) in einer ersten Richtung (D1) erstrecken, die parallel zur ersten Ebene (P1) und zur zweiten Ebene (P2) verläuft.

3. Stützbauteil (1) nach einem der vorhergehenden Ansprüche, **dadurch gekennzeichnet, dass** sich der zweite Arm (52) und das sechste Verbindungsorgan (36) in einer zweiten Richtung (D2) erstrecken, die parallel zur ersten Ebene (P1) und zur zweiten Ebene (P2) verläuft.

4. Stützbauteil (1) nach den Ansprüchen 2 und 3, **dadurch gekennzeichnet, dass** der erste Arm (51) einen ersten Schenkel (81) trägt, der mit einer ersten Befestigungsnut (91) versehen ist, und der zweite Arm (52) einen zweiten Schenkel (82) trägt, der mit einer zweiten Befestigungsnut (92) versehen ist, wobei sich der erste Schenkel (81) und der zweite Schenkel (82) in derselben Schenkelrichtung (D') erstrecken, die die erste Richtung (D1) und die zweite Richtung (D2) schneidet.

5. Stützbauteil (1) nach einem der vorhergehenden Ansprüche, **dadurch gekennzeichnet, dass** der Körper (2) mit mindestens einem Paar Befestigungsschienen (61, 62) versehen ist, das mindestens eine erste Befestigungsschiene (61), die einen beliebigen der beiden Zweige (11, 12) ausstattet, und mindestens eine zweite Schiene (62), die die Basis (3) oder den anderen beliebigen der beiden Zweige (11, 12) ausstattet, umfasst.

6. Stützbauteil (1) nach einem der vorhergehenden Ansprüche, **dadurch gekennzeichnet, dass** das Stützbauteil (1) aus zwei Stützelementen (71, 72) besteht, von denen ein erstes Stützelement (71) als Winkel angeordnet ist, der sich innerhalb der Basisebene (P) und der ersten Ebene (P1) erstreckt, wobei sich das erste Stützelement (71) zwischen dem ersten Ende (21) und einem dritten Ende (23), das mit einem siebten Verbindungsorgan (37) versehen ist, erstreckt, wobei das erste Stützelement (71) das dritte Verbindungsorgan (33) und den zweiten Arm (52) umfasst, und von denen ein zweites Stützelement (72) als Winkel angeordnet ist, der sich innerhalb der Basisebene (P) und der zweiten Ebene (P2) erstreckt, wobei sich das zweite Stützelement (72) zwischen dem zweiten Ende (22) und einem vierten Ende (24), das mit einem achten Verbindungsorgan (38) versehen ist, erstreckt, wobei das zweite Stützelement (72) das vierte Verbindungsorgan (34) und den ersten Arm (51) umfasst, wobei das siebte Verbindungsorgan (37) geeignet ist, mit dem achten Verbindungsorgan (38) zusammenzuwirken, um ein Montagemittel (37, 38) der Stützelemente (71, 72) zu bilden.

7. Stützbauteil (1) nach Anspruch 6, **dadurch gekennzeichnet, dass** das achte Verbindungsorgan (38) als Kanal (30d) angeordnet ist, der geeignet ist, das siebte Verbindungsorgan (37) aufzunehmen, das als Band (30) angeordnet ist, das an einer seiner Flächen (30a) mit ersten Zähnen (30c) versehen ist, die geeignet sind, mit zweiten Zähnen (30f) zusammenzuwirken, die eine Wand (30e) ausstatten, die den Kanal (30d) begrenzt.

8. Stützabschnitt (100), umfassend zwei identische Stützbauteile (1) nach einem der vorhergehenden Ansprüche, **dadurch gekennzeichnet, dass** das erste Verbindungsorgan (31) eines beliebigen der Stützbauteile (1) und das zweite Verbindungsorgan (32) des anderen beliebigen der Stützbauteile (1) Steckorgane sind, die geeignet sind, miteinander zusammenzuwirken, um ein erstes Verbindungsmittel (31, 32) der Stützbauteile (1) zu bilden.

9. Stützabschnitt (100) nach Anspruch 8, **dadurch gekennzeichnet, dass** das erste Verbindungsorgan (31) eines beliebigen der Stützbauteile (1) als Kanal (30d) angeordnet ist, der geeignet ist, das zweite Verbindungsorgan (32) des anderen beliebigen der Stützbauteile (1) aufzunehmen, das als Band (30) angeordnet ist, das an einer seiner Flächen (30a) mit ersten Zähnen (30c) versehen ist, die geeignet sind, mit zweiten Zähnen (30f) zusammenzuwirken, die eine Wand (30e) ausstatten, die den Kanal (30d) begrenzt.

10. Stützabschnitt (100) nach einem der Ansprüche 8 und 9, **dadurch gekennzeichnet, dass** das fünfte Verbindungsorgan (35) eines beliebigen der Stützbauteile (1) und das sechste Verbindungsorgan (36) des anderen beliebigen der Stützbauteile (1) Steckorgane sind, die geeignet sind, miteinander zusammenzuwirken, um ein zweites Verbindungsmittel (35, 36) der Stützbauteile (1) zu bilden.

11. Stützabschnitt (100) nach Anspruch 10, **dadurch gekennzeichnet, dass** das fünfte Verbindungsorgan (35) eines beliebigen der Stützbauteile (1) als Kanal (30d) angeordnet ist, der geeignet ist, das sechste Verbindungsorgan (36) des anderen beliebigen der Stützbauteile (1) aufzunehmen, das als Band (30) angeordnet ist, das an einer seiner Flächen (30a) mit ersten Zähnen (30c) versehen ist, die geeignet sind, mit zweiten Zähnen (30f) zusammenzuwirken, die eine Wand (30e) ausstatten, die den Kanal (30d) begrenzt.

12. Träger (200), umfassend zwei Stützabschnitte (100) nach einem der Ansprüche 8 bis 11, **dadurch gekennzeichnet, dass** das dritte Verbindungsorgan (33) eines beliebigen der Stützabschnitte (100) und das vierte Verbindungsorgan (34) des anderen beliebigen der Stützabschnitte (100) Steckorgane sind, die geeignet sind, miteinander zusammenzuwirken, um ein Befestigungsmittel (33, 34) der Stützabschnitte (100) zu bilden.

13. Träger (200) nach Anspruch 12, **dadurch gekennzeichnet, dass** das dritte Verbindungsorgan (33) eines beliebigen der Stützabschnitte (100) als Kanal (30d) angeordnet ist, der geeignet ist, das vierte Verbindungsorgan (34) des anderen beliebigen der Stützabschnitte (100) aufzunehmen, das als Band (30) angeordnet ist, das an einer seiner Flächen (30a) mit ersten Zähnen (30c) versehen ist, die geeignet sind, mit zweiten Zähnen (30f) zusammenzuwirken, die eine Wand (30e) ausstatten, die den Kanal (30d) begrenzt.

14. Wärmebehandlungsvorrichtung (210), umfassend einen Träger (200) nach einem der Ansprüche 12 und 13 und einen Wärmetauscher (202), der in einem inneren Volumen (201) untergebracht ist, das durch den Träger (200) begrenzt wird.

15. Wärmebehandlungsmodul (220), umfassend eine Wärmebehandlungsvorrichtung (210) nach Anspruch 14 und Befestigungsmittel (221) der Wärmebehandlungsvorrichtung (210) an einem Element eines Kraftfahrzeugs.

## Claims

1. Support component (1) comprising a U-shaped body (2) having a base (3) extending within a base plane (P), a first branch (11) extending in a first plane (P1) orthogonal to the base plane (P) and a second branch (12) extending in a second plane (P2) orthogonal to the base plane (P), the body (2) extending between a first end (21) provided with a first connecting member (31) and a second end (22) provided with a second connecting member (32), **characterized in that** the base (3) comprises a first face (41) which intersects the base plane (P) and which is provided with a third connecting member (33) and a fourth connecting member (34), the base (3) comprising a second face (42) which is parallel to the base plane (P) and which is provided with a first arm (51) equipped with a fifth connecting member (35) and a second arm (52) equipped with a sixth connecting member (36), the first arm (51) and the second arm (52) being interposed between the first branch (11) and the second branch (12).

2. Support component (1) according to the preceding claim, **characterized in that** the first arm (51) and the fifth connecting member (35) extend along a first direction (D1) which is parallel to the first plane (P1) and to the second plane (P2).

3. Support component (1) according to any one of the preceding claims, **characterized in that** the second arm (52) and the sixth connecting member (36) extend along a second direction (D2) which is parallel to the first plane (P1) and to the second plane (P2).

4. Support component (1) according to claims 2 and 3, **characterized in that** the first arm (51) carries a first leg (81) provided with a first fixing groove (91) and the second arm (52) carries a second leg (82) provided with a second fixing groove (92), the first leg (81) and the second leg (82) extending along a same leg direction (D') that intersects the first direction (D1) and the second direction (D2).

5. Support component (1) according to any one of the preceding claims, **characterized in that** the body (2) is provided with at least one pair of fixing slides (61, 62) comprising at least a first fixing slide (61) equipping any one of the two branches (11, 12) and at least a second slide (62) equipping the base (3) or the other one of the two branches (11, 12).

6. Support component (1) according to any one of the preceding claims, **characterized in that** the support component (1) is constituted of two support elements (71, 72), including a first support element (71) arranged as an elbow extending within the base plane (P) and the first plane (P1), the first support element (71) extending between the first end (21) and a third end (23) provided with a seventh connecting member (37), the first support element (71) comprising the third connecting member (33) and the second arm (52), and a second support element (72) arranged as an elbow extending within the base plane (P) and the second plane (P2), the second support element (72) extending between the second end (22) and a fourth end (24) provided with an eighth connecting member (38), the second support element (72) comprising the fourth connecting member (34) and the first arm (51), the seventh connecting member (37) being able to cooperate with the eighth connecting member (38) to form an assembly means (37, 38) of the support elements (71, 72).

7. Support component (1) according to claim 6, **characterized in that** the eighth connecting member (38) is arranged as a channel (30d) able to accommodate the seventh connecting member (37) which is arranged as a strip (30) provided on one of its faces (30a) with first teeth (30c) able to cooperate with second teeth (30f) equipping a wall (30e) delimiting the channel (30d).

8. Support portion (100) comprising two identical support components (1) according to any one of the preceding claims, **characterized in that** the first connecting member (31) of any one of the support components (1) and the second connecting member (32) of the other one of the support components (1) are interlocking members able to cooperate together to form a first connecting means (31, 32) of the support components (1).

9. Support portion (100) according to claim 8, **characterized in that** the first connecting member (31) of any one of the support components (1) is arranged as a channel (30d) able to accommodate the second connecting member (32) of the other one of the support components (1) which is arranged as a strip (30) provided on one of its faces (30a) with first teeth (30c) able to cooperate with second teeth (30f) equipping a wall (30e) delimiting the channel (30d).

10. Support portion (100) according to any one of claims 8 and 9, **characterized in that** the fifth connecting member (35) of any one of the support components (1) and the sixth connecting member (36) of the other one of the support components (1) are interlocking members able to cooperate together to form a second connecting means (35, 36) of the support components (1).

11. Support portion (100) according to claim 10, **characterized in that** the fifth connecting member (35) of any one of the support components (1) is arranged as a channel (30d) able to accommodate the sixth connecting member (36) of the other one of the support components (1) which is arranged as a strip (30) provided on one of its faces (30a) with first teeth (30c) able to cooperate with second teeth (30f) equipping a wall (30e) delimiting the channel (30d).

12. Support (200) comprising two support portions (100) according to any one of claims 8 to 11, **characterized in that** the third connecting member (33) of any one of the support portions (100) and the fourth connecting member (34) of the other one of the support portions (100) are interlocking members able to cooperate together to form an attachment means (33, 34) of the support portions (100).

13. Support (200) according to claim 12, **characterized in that** the third connecting member (33) of any one of the support portions (100) is arranged as a channel (30d) able to accommodate the fourth connecting member (34) of the other one of the support portions (100) which is arranged as a strip (30) provided on one of its faces (30a) with first teeth (30c) able to cooperate with second teeth (30f) equipping a wall (30e) delimiting the channel (30d).

14. Heat treatment device (210) comprising a support (200) according to any one of claims 12 and 13 and a heat exchanger (202) housed inside an internal volume (201) delimited by the support (200).

15. Heat treatment module (220) comprising a heat treatment device (210) according to claim 14 and means for fixing (221) the heat treatment device (210) on an element of a motor vehicle.
